# EUROPEAN PATENT APPLICATION

(11) **EP 4 738 656 A1**
(43) Date of publication of application: **06.05.2026**
(21) Application number: 24831041.9
(22) Date of filing: 28.06.2024
(51) Int. Cl.: H02K 1/276, H02K 1/28

(54) **MOTOR ROTOR AND MOTOR**

(30) Priority: 30.06.2023 CN 202310797571
(71) Applicant: Suzhou Inovance Technology Co., Ltd., Suzhou, Jiangsu 215104 (CN)
(72) Inventor: WU, Bocheng, Suzhou, Jiangsu 215104 (CN); DU, Xinming, Suzhou, Jiangsu 215104 (CN); ZHENG, Jun, Suzhou, Jiangsu 215104 (CN); DUAN, Shiying, Suzhou, Jiangsu 215104 (CN); PANG, Yilong, Suzhou, Jiangsu 215104 (CN); CHU, Wenqiang, Suzhou, Jiangsu 215104 (CN); ZHU, Xiaoyong, Suzhou, Jiangsu 215104 (CN)
(74) Representative: Osterhoff, Utz
(86) International application number: PCT/CN2024/102608
(87) International publication number: WO 2025/002416

(57) **Abstract**

The present application discloses a motor rotor and a motor. The motor rotor includes a rotor core provided with a plurality of first magnet slots uniformly distributed along a circumferential direction of the rotor core; the first magnet slots extend in a radial direction, and a tangentially magnetized main permanent magnet is provided in the first magnet slot; a second magnet slot is provided between any two adjacent first magnet slots on the rotor core, and an auxiliary permanent magnet module is provided in the second magnet slot; the auxiliary permanent magnet module includes at least two first auxiliary permanent magnet units, and closest surface magnetic poles of any two adjacent main permanent magnets are identical; a magnetization direction of the first auxiliary permanent magnet unit includes a radial magnetization component; the magnetization direction of the first auxiliary permanent magnet unit comprises a tangential magnetization component, and the tangential magnetization component of the first auxiliary permanent magnet unit is identical to a magnetization direction of the main permanent magnet adjacent to the first auxiliary permanent magnet unit.

## Description

The present application claims priority to Chinese Patent Application No. 202310797571.1, entitled "MOTOR ROTOR AND MOTOR," filed with the China National Intellectual Property Administration on June 30, 2023, the entire contents of which are incorporated herein by reference.

### TECHNICAL FIELD

The present application relates to the technical field of motor, and in particular to a motor rotor and a motor.

### BACKGROUND

Permanent magnet motors are widely used in industrial servo systems as actuators due to their advantages such as high dynamic response capability, high power density, and high control accuracy. They receive position, speed, and torque commands from an higher-level controller and accurately drive a load, featuring strong overload capacity, good linearity, and fast dynamic response. Therefore, they have been extensively applied in the industrial field.

With the development of industry, various application scenarios have put forward higher requirements on the power density and torque density of industrial motors. However, in a conventional spoke-type built-in permanent magnet motor, magnetic leakage often occurs near the shaft surface inside the rotor, resulting in a decrease in the back electromotive force of the motor and a reduction in power density.

### SUMMARY

### TECHNICAL PROBLEM

The main purpose of the present application is to provide a motor rotor and a motor, aiming to solve the problem of excessive magnetic leakage occurring near the shaft surface inside the rotor core of conventional spoke-type motors, which leads to a decrease in back electromotive force and power density, thereby improving the motor torque and power density and reducing torque ripples.

### TECHNICAL SOLUTION

In order to achieve the above purpose, the present application provides a motor rotor, which includes a rotor core provided with a plurality of first magnet slots uniformly distributed along a circumferential direction of the rotor core. The first magnet slots extend in a radial direction, and a tangentially magnetized main permanent magnet is provided in the first magnet slot. A second magnet slot is provided between any two adjacent first magnet slots on the rotor core, and an auxiliary permanent magnet module is provided in the second magnet slot; the auxiliary permanent magnet module includes at least two first auxiliary permanent magnet units, and closest surface magnetic poles of any two adjacent main permanent magnets are identical. A magnetization direction of the first auxiliary permanent magnet unit includes a radial magnetization component, a direction of the radial magnetization component of the first auxiliary permanent magnet unit located between two main permanent magnets provided with magnetization directions facing each other is directed toward a stator along a radial direction of the rotor core, and a direction of the radial magnetization component of the first auxiliary permanent magnet unit located between two main permanent magnets provided with magnetization directions diverging from each other is directed toward a rotor axis along the radial direction of the rotor core. The magnetization direction of the first auxiliary permanent magnet unit includes a tangential magnetization component, and the tangential magnetization component of the first auxiliary permanent magnet unit is identical to a magnetization direction of the main permanent magnet adjacent to the first auxiliary permanent magnet unit. The magnetization direction of the main permanent magnet and the tangential magnetization direction of the first auxiliary permanent magnet unit both are tangential directions of a circle centered on the axis of the rotor core.

In an embodiment, the at least two first auxiliary permanent magnet units include at least two auxiliary permanent magnets provided with at least one magnetization direction, or one auxiliary permanent magnet provided with at least two magnetization directions.

In an embodiment, an angle between all magnetization directions or opposite directions of the magnetization directions in the auxiliary permanent magnet module and a center line of the second magnet slot along the radial direction of the rotor core is defined as α, and α is greater than or equal to 0° and less than or equal to 90°.

In an embodiment, an angle between all magnetization directions or opposite directions of the magnetization directions in the auxiliary permanent magnet module and a center line of the second magnet slot along the radial direction of the rotor core is defined as α, and α is greater than or equal to 0° and less than or equal to 40°.

In an embodiment, the auxiliary permanent magnet modules are symmetrically distributed about a center line of the second magnet slot along the radial direction of the rotor core, and an angle α of each of the first auxiliary permanent magnet units located on one side of the center line decreases gradually from a side distant from the center line toward a side adjacent to the center line.

In an embodiment, the auxiliary permanent magnet module further includes a second auxiliary permanent magnet unit located between the first auxiliary permanent magnet units, and an angle α between a magnetization direction of the second auxiliary permanent magnet unit and a center line of the second magnet slot along the radial direction of the rotor core is 0°.

In an embodiment, the auxiliary permanent magnet module is provided adjacent to an inner edge of the rotor core.

In an embodiment, a side wall of the auxiliary permanent magnet module adjacent to the inner edge of the rotor core and a side wall of the main permanent magnet adjacent to the inner edge of the rotor core are located on a same circle centered on the axis of the rotor core.

In an embodiment, a length of the auxiliary permanent magnet module along the radial direction of the rotor core is L2, anda length of the main permanent magnet along the radial direction of the rotor core is L1; L2/L1 is greater than 0 and less than 1.

In an embodiment, L2/L1 is greater than or equal to 0.1 and less than or equal to 0.5.

In an embodiment, in adjacent main permanent magnets and auxiliary permanent magnet modules, a side surface of the main permanent magnet facing the auxiliary permanent magnet module is parallel to or in contact with a side surface of the auxiliary permanent magnet module facing the main permanent magnet module.

In an embodiment, a distance D is provided between a side surface of the main permanent magnet facing the auxiliary permanent magnet module and a side surface of the auxiliary permanent magnet module facing the main permanent magnet, and D is greater than or equal to 0 mm and less than or equal to 0.5 mm.

In an embodiment, the rotor core includes a plurality of stacked first silicon steel sheets, and the main permanent magnet and the auxiliary permanent magnet module both pass through the first silicon steel sheets.

In an embodiment, the rotor core includes a plurality of stacked first silicon steel sheets, and at least one second silicon steel sheet is stacked between at least two adjacent first silicon steel sheets; the main permanent magnet and the auxiliary permanent magnet module both pass through the first silicon steel sheet and the second silicon steel sheet, the second silicon steel sheet is provided with a hollow portion, and the main permanent magnet and the auxiliary permanent magnet module are at least partially located in the hollow portion.

In addition, the present application further provides a motor, which includes a stator assembly and the motor rotor as described above, where the stator assembly is disposed on a periphery of the motor rotor.

### TECHNICAL EFFECT

In the technical solution of the present application, the motor rotor is applied to the motor. The rotor and the motor of the present application are provided by adding an auxiliary permanent magnet module between two adjacent main permanent magnets. The auxiliary permanent magnet module includes at least two first auxiliary permanent magnet units. The auxiliary permanent magnet module cooperates with the main permanent magnet. On the one hand, the auxiliary permanent magnet module reduces magnetic leakage on the inner surface of the rotor core and the outer surface of the rotor shaft. On the other hand, the auxiliary permanent magnet module is also located in the main magnetic circuit, which can further enhance the magnetic flux linkage on the main magnetic circuit and the magnetic flux density in the air gap, thereby enhancing the magnetic concentration ability and improving the torque and power density of the motor. At the same time, the magnetization direction of the auxiliary permanent magnet module can form a more sinusoidal air gap magnetic field in the air gap, thereby reducing the air-gap flux density harmonics and the phase back electromotive force harmonics, and ultimately reducing the cogging torque and torque ripple.

### BRIEF DESCRIPTION OF THE DRAWINGS

In order to more clearly illustrate the embodiments of the present application or the technical solutions in the prior art, the following briefly introduces the drawings required for use in the embodiments or the description of the prior art. Obviously, the drawings described below are only some embodiments of the present application. For those skilled in the art, other drawings can be obtained based on the structures shown in these drawings without paying any creative work.
FIG. 1 is a schematic structural diagram of a motor rotor according to an embodiment of the present application.
FIG. 2 is a schematic diagram of a partial structure of the motor rotor according to an embodiment of the present application.
FIG. 3 is a schematic structural diagram of the motor rotor according to another embodiment of the present application.
FIG. 4 is a schematic structural diagram of the motor rotor according to another embodiment of the present application.
FIG. 5 is a schematic structural diagram of a rotor core according to an embodiment of the present application.
FIG. 6 is a schematic structural diagram of a first silicon steel sheet according to an embodiment of the present application.
FIG. 7 is a schematic structural diagram of a second silicon steel sheet according to an embodiment of the present application.
FIG. 8 is a schematic structural diagram of a motor according to an embodiment of the present application.
FIG. 9 is a comparison diagram showing an absolute value of the core magnetic flux density between a topology of a combination of a main magnet and an auxiliary permanent magnet module according to an embodiment of the present application and a conventional banner topology at a vertical distance of 1 mm from sides of a first magnet slot and a second magnet slot adjacent to a rotor shaft.
FIG. 10 is a diagram showing a relationship between an angle α between a magnetizing direction of an auxiliary permanent magnet module and a radial centerline of a second magnet slot along a rotor core and torque performance of a motor according to an embodiment of the present application.

Description of reference signs:

**[Table 1-sm-0001]**

| Reference sign | Name | Reference sign | Name |
|---|---|---|---|
| 100 | motor rotor | 143 | second positioning slot |
| 1 | rotor core | 15 | installation hole |
| 11 | first magnet slot | 16 | slot |
| 12 | second magnet slot | 2 | main permanent magnet |
| 13 | first silicon steel sheet | 3 | auxiliary permanent magnet module |
| 131 | first through slot | 31, 32, 33, 34, 311, 312, 314, 315, 316, 317 | first auxiliary permanent magnet unit |
| 132 | second through slot | 313 | second auxiliary permanent magnet unit |
| 14 | second silicon steel sheet | 200 | motor |
| 141 | hollow portion | 201 | stator assembly |
| 142 | first positioning slot | 202 | air gap |

The realization of the purpose, functional features and advantages of the present application will be further explained in conjunction with the embodiments and with reference to the accompanying drawings.

### DETAILED DESCRIPTION OF THE EMBODIMENTS

The technical solutions of the embodiments of the present application will be clearly and completely described below with reference to the accompanying drawings of the embodiments. It is apparent that the described embodiments are only part of the embodiments of the present application and not all of them. Based on the embodiments of the present application, all other embodiments obtained by those skilled in the art without creative efforts shall fall within the scope of protection of the present application.

It should be noted that all directional indications (such as up, down, left, right, front, and rear, etc.) in the embodiments of the present application are merely used to explain the relative positional relationship and movement between the components under a specific posture (as shown in the drawings). When the specific posture changes, the corresponding directional indications shall change accordingly.

In addition, in the present application, the descriptions involving "first," "second," and the like are merely for descriptive purposes and should not be construed as indicating or implying relative importance or implicitly specifying the number of the indicated technical features. Accordingly, features defined with "first" or "second" may explicitly or implicitly include at least one such feature. In the description of the present application, the term "a plurality of" means at least two, for example, two, three, and so on, unless otherwise specifically defined.

In the present application, unless otherwise expressly specified and limited, the terms "connect," "fix," and the like should be understood in a broad sense. For example, "fix" may refer to a fixed connection, a detachable connection, or an integral formation; it may refer to a mechanical connection or an electrical connection; it may refer to a direct connection or an indirect connection through an intermediate medium; it may also refer to a communication between two components or an interaction relationship between two components, unless otherwise expressly defined. Those skilled in the art can understand the specific meanings of the above terms in the present application according to the specific context.

In addition, the technical solutions of the various embodiments of the present application may be combined with each other, but such combination must be based on the premise that those skilled in the art can implement it. When the combination of the technical solutions leads to contradictions or cannot be realized, it shall be deemed that such combination does not exist and is not within the scope of protection sought by the present application.

The present application provides a motor rotor, aiming to solve the problem of excessive magnetic leakage occurring near the shaft surface inside the rotor, which results in a decrease in back electromotive force and power density, thereby improving the torque and power density of the motor.

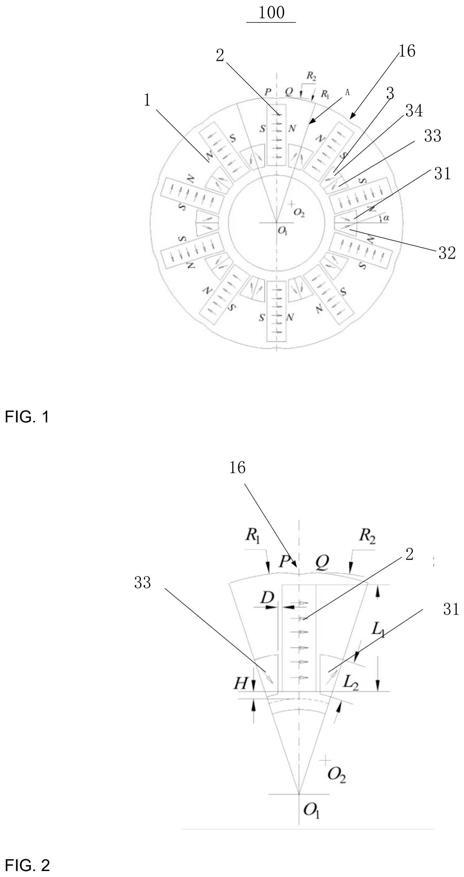

As shown in FIG. 1 to FIG. 5, in an embodiment, a motor rotor 100 includes a rotor core 1. The rotor core 1 is provided with a plurality of first magnet slots 11 uniformly distributed along a circumferential direction of the rotor core 1. The first magnet slots 11 extend in a radial direction, and a tangentially magnetized main permanent magnet 2 is provided in each of the first magnet slots 11. A second magnet slot 12 is provided between any two adjacent first magnet slots 11 on the rotor core 1, and an auxiliary permanent magnet module 3 is provided in the second magnet slot 12. The auxiliary permanent magnet module 3 is provided with at least two first auxiliary permanent magnet units. Taking FIG. 1 as an example, one auxiliary permanent magnet module 3 is provided with two first auxiliary permanent magnet units 31 and 32, and another auxiliary permanent magnet module 3 is provided with two first auxiliary permanent magnet units 33 and 34. It is understood that the number n of the at least two first auxiliary permanent magnet units may be n = 2, 3, 4, ..., where n is an integer. In an embodiment, the at least two first auxiliary permanent magnet units include at least two auxiliary permanent magnets each provided with at least one magnetization direction, or one auxiliary permanent magnet provided with at least two magnetization directions.

In an embodiment of the present application, the at least two first auxiliary permanent magnet units may be understood as including at least two auxiliary permanent magnets, each auxiliary permanent magnet provided with at least one magnetization direction, and each auxiliary permanent magnet being formed as one auxiliary permanent magnet unit. The at least two first auxiliary permanent magnet units may also be understood as including one auxiliary permanent magnet, in which case the one auxiliary permanent magnet has at least two magnetization directions, that is, one magnetization direction corresponds to one auxiliary permanent magnet unit. In other words, the auxiliary permanent magnet module to which the at least two first auxiliary permanent magnet units belong is integrally formed, and at least two magnetization directions are formed on the integrally formed auxiliary permanent magnet module. The embodiment of the present application does not limit the form of the auxiliary permanent magnet unit as long as at least two magnetization directions can be formed.

In an embodiment of the present application, the number of the second magnet slots 12 located between the two main permanent magnets 2 may be one or two or more. When the number of the second magnet slots 12 is one, at least two first auxiliary permanent magnet units are provided in the one second magnet slot 12. When the number of the second magnet slots 12 is two, one, two, or more first auxiliary permanent magnet units may be provided in each second magnet slot 12, and the numbers of the first auxiliary permanent magnet units provided in the two second magnet slots 12 may be different. In an embodiment, when the number of the second magnet slots 12 is multiple, one, two, or more first auxiliary permanent magnet units may be provided in each second magnet slot 12, and the numbers of the first auxiliary permanent magnet units provided in the multiple second magnet slots 12 may be different. That is, the embodiment of the present application does not limit the number of the second magnet slots as long as at least two first auxiliary permanent magnet units can be provided.

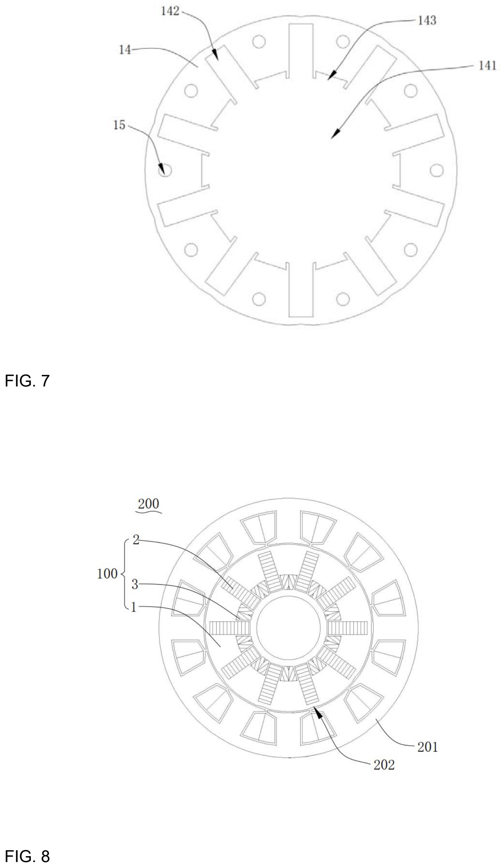

In an embodiment, the motor rotor 100 is applied to a motor as shown in FIG. 8. Due to the presence of the auxiliary permanent magnet module 3, the magnetic flux density in the rotor core 1 between the main permanent magnet 2 and the rotor shaft is reduced compared with that of a conventional spoke-type built-in permanent magnet motor, thereby reducing magnetic leakage and improving the utilization rate of the permanent magnet, which contributes to the improvement of motor torque and power density. In the present application, by adding the auxiliary permanent magnet module 3 between two adjacent main permanent magnets 2 to cooperate with the main permanent magnets 2, on one hand, the auxiliary permanent magnet module 3 reduces magnetic leakage on an inner surface of the rotor core 1 and an outer surface of the rotor shaft; on the other hand, the auxiliary permanent magnet module 3 is also located in a main magnetic circuit, which can further enhance the magnetic flux in the main magnetic circuit and the magnetic flux density in an air gap 202, thereby achieving the effect of enhancing magnetic concentration capability and improving motor torque and power density.

In an embodiment, the closest surface magnetic poles of any two adjacent main permanent magnets 2 are identical. That is, among three consecutively adjacent main permanent magnets 2, an N pole of the middle main permanent magnet 2 faces an N pole of the main permanent magnet 2 on one side thereof, and an S pole of the middle main permanent magnet 2 faces an S pole of the main permanent magnet 2 on the other side thereof. A plurality of even-numbered main permanent magnets 2 are installed in the uniformly distributed first magnet slots 11 to ensure a balanced force on the main permanent magnets 2, such that the number of poles of a motor 200 is equal to the number of the main permanent magnets 2.

As shown in FIG. 1, the auxiliary permanent magnet module 3 includes at least two first auxiliary permanent magnet units 31, 32, 33, and 34. The magnetization directions of the at least two first auxiliary permanent magnet units 31, 32, 33, and 34 are determined by directions of the main permanent magnets 2 on both sides. In this embodiment, the portion adjacent to a rotor axis is defined as inner, and the portion adjacent to an air gap 202 is defined as outer. The magnetization direction of each of the first auxiliary permanent magnet units 31, 32, 33, and 34 includes a radial magnetization component. A direction of the radial magnetization component of the two first auxiliary permanent magnet units 31 and 32 located between two main permanent magnets 2 provided with convergent magnetization directions is directed radially outward along the rotor core 1. Specifically, the direction of the radial magnetization component is directed toward a stator assembly 201 along a radial direction of the rotor core 1. A direction of the radial magnetization component of the two first auxiliary permanent magnet units 33 and 34 located between two main permanent magnets 2 provided with convergent magnetization directions is directed radially inward along the rotor core 1. Specifically, the direction of the radial magnetization component is directed toward a rotor shaft along the radial direction of the rotor core 1. That is, the direction of the radial magnetization component of the two first auxiliary permanent magnet units 31 and 32 located between N poles of the main permanent magnets is directed toward the stator assembly 201 along the radial direction of the rotor core, and the direction of the radial magnetization component of the two first auxiliary permanent magnet units 33 and 34 located between S poles of the main permanent magnets is directed toward the rotor shaft along the radial direction of the rotor core 1. That is, the magnetization direction of the main permanent magnets 2 alternates between adjacent poles. When the magnetization directions of two adjacent main permanent magnets 2 are opposite, the magnetic flux density and magnetic flux linkage of a direct axis are directed radially from the rotor toward the stator, and the magnetization directions of the two first auxiliary permanent magnet units 31 and 32 located therebetween include components directed radially from the rotor toward the stator. In contrast, when the magnetization directions of two adjacent main permanent magnets 2 are opposite, the magnetization directions of the first auxiliary permanent magnet units 33 and 34 located therebetween include components directed radially from the rotor toward the rotor shaft. This configuration can enhance the magnetic flux linkage and magnetic flux density of the direct axis and the main magnetic circuit, thereby ultimately improving the magnetic concentration capability of the motor rotor 100.

Based on the above embodiment, the magnetization direction of each of the first auxiliary permanent magnet units 31, 32, 33, and 34 includes a tangential magnetization component. The tangential magnetization components of the first auxiliary permanent magnet units 31, 32, 33, and 34 are identical to the magnetization direction of the main permanent magnet 2 adjacent to the first auxiliary permanent magnet units 31 and 32. The magnetization direction of the main permanent magnets 2 and the tangential magnetization directions of the first auxiliary permanent magnet units 31, 32, 33, and 34 are both tangential directions of a circle centered on an axis of the rotor core 1. This configuration can form a more sinusoidal air-gap magnetic field in the air gap 202, thereby reducing the air-gap magnetic flux density harmonics and back electromotive force harmonics, and ultimately reducing cogging torque and torque ripple.

In an embodiment, when the magnetization direction of the main permanent magnet 2 is clockwise, the directions of the tangential magnetization components of the first auxiliary permanent magnet units 31 and 33 located on both sides of the main permanent magnet 2 are also clockwise. When the magnetization direction of the main permanent magnet 2 is counterclockwise, the directions of the tangential magnetization components of the two first auxiliary permanent magnet units 32 and 34 located on both sides of the main permanent magnet 2 are also counterclockwise. A quasi-Halbach array is formed by the main permanent magnet 2 and the auxiliary permanent magnet module 3, which increases the magnetic field on the air gap 202 side and reduces the magnetic field on the rotor shaft side. Therefore, the torque ripple performance can be further optimized by changing the magnetization angles of at least the two first auxiliary permanent magnet units.

Since the inner magnetic field of an ideal Halbach array is a standard zero magnetic field, in the embodiment of the present application, the auxiliary permanent magnet module 3 and the main permanent magnet 2 form a quasi-Halbach array, so that the magnetic flux density at the inner edge portion of the rotor core 1 is reduced. Compared with a conventional spoke-type built-in permanent magnet motor, the magnetic flux leakage inside the rotor core is greatly reduced, and the effective utilization rate of the magnetic flux linkage is increased, which helps improve the power density.

In an embodiment, an angle α is defined between all magnetization directions or opposite directions of the magnetization directions in each auxiliary permanent magnet module 3 and a center line of the second magnet slot along a radial direction of the rotor core. In an embodiment, for the auxiliary permanent magnet module 3 located between two main permanent magnets provided with convergent magnetization directions (between N poles of the main permanent magnets), an angle α is formed between all magnetization directions in the auxiliary permanent magnet module 3 and the center line of the second magnet slot along the radial direction of the rotor core. For the auxiliary permanent magnet module located between two main permanent magnets provided with divergent magnetization directions (between S poles of the main permanent magnets), an angle α is formed between opposite directions of all magnetization directions in the auxiliary permanent magnet module and the center line of the second magnet slot along the radial direction of the rotor core, where 0° ≤ α ≤ 90°.

In an embodiment, taking FIG. 1 as an example, an angle α is formed between the magnetization directions of the first auxiliary permanent magnet units 31 and 32 located between two main permanent magnets provided with convergent magnetization directions (between N poles of the main permanent magnets) and a center line A of the second magnet slot along a radial direction of the rotor core. An angle α is also formed between opposite directions of the magnetization directions of the first auxiliary permanent magnet units 33 and 34 located between two main permanent magnets provided with divergent magnetization directions (between S poles of the main permanent magnets) and the center line A of the second magnet slot along the radial direction of the rotor core. When the angle α varies between 0° and 90°, the torque performance of the motor, including average torque and torque ripple, also varies correspondingly. The average torque decreases as the angle α increases, while the torque ripple first decreases and then increases as the angle α increases. Therefore, the angle α can be optimized according to torque performance requirements to obtain a corresponding design solution.

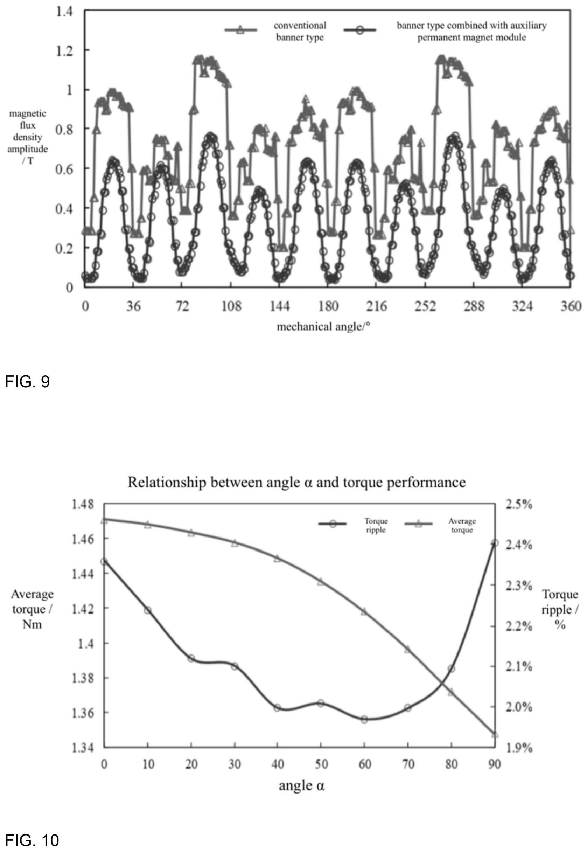

In the example of the above embodiment, an angle α is formed between all magnetization directions or opposite directions of the magnetization directions in the auxiliary permanent magnet module 3 and a center line A of the second magnet slot 12 along a radial direction of the rotor core, where 0° ≤ α ≤ 40°, that is, the value range of the angle α may be from 0° to 40°. As shown in FIG. 9 and FIG. 10, within this range, the average torque of the motor decreases slightly while the torque ripple decreases rapidly. This configuration is particularly suitable for a motor provided with five pole pairs, that is, the number of the main permanent magnets 2 is ten.

In an embodiment of the present application, the auxiliary permanent magnet module further includes a second auxiliary permanent magnet unit located between the first auxiliary permanent magnet units, and an angle α formed between a magnetization direction of the second auxiliary permanent magnet unit and a center line of the second magnet slot along a radial direction of the rotor core is 0. The number of the second auxiliary permanent magnet units is not limited and may be one or more.

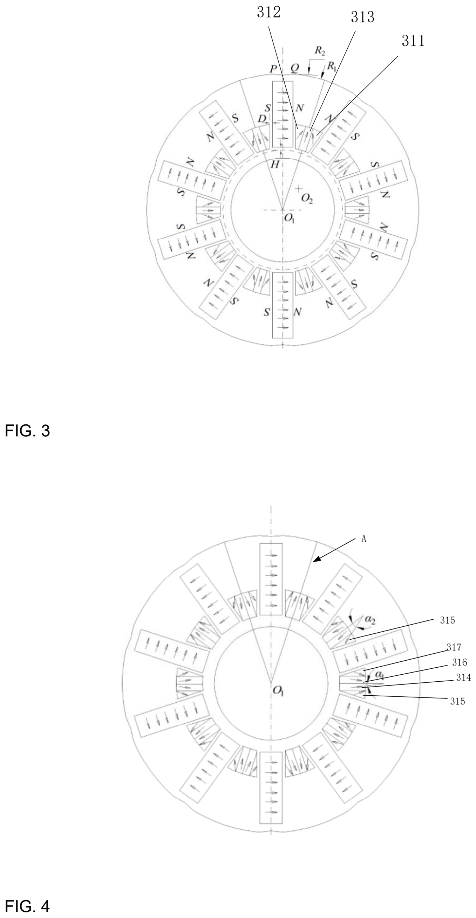

As shown in FIG. 3, in another embodiment of the present application, the auxiliary permanent magnet module 3 includes a first auxiliary permanent magnet unit 311, a first auxiliary permanent magnet unit 312, and a second auxiliary permanent magnet unit 313 located between the first auxiliary permanent magnet unit 311 and the first auxiliary permanent magnet unit 312. A magnetization direction of the second auxiliary permanent magnet unit 313 coincides with a center line A of the second magnet slot 12 along a radial direction of the rotor core 1, and an angle formed therebetween is 0. In this embodiment, the second auxiliary permanent magnet unit 313 includes one second auxiliary permanent magnet unit. In other embodiments, the second auxiliary permanent magnet unit may also include two or more second auxiliary permanent magnet units, and in this case, the magnetization directions of the two or more second auxiliary permanent magnet units form an angle of 0 with the center line A of the second magnet slot 12 along the radial direction of the rotor core. In an embodiment of the present application, the auxiliary permanent magnet module 3 is symmetrically distributed about a center line of the second magnet slot 12 along a radial direction of the rotor core 2. An angle α of each auxiliary permanent magnet unit (including the first auxiliary permanent magnet unit and/or the second auxiliary permanent magnet unit) located on one side of the center line decreases sequentially from a side distant from the center line A toward a side adjacent to the center line A. As shown in FIG. 4, in another embodiment of the present application, the at least two first auxiliary permanent magnet units include four first auxiliary permanent magnet units (314, 315, 316, and 317). The first auxiliary permanent magnet units 314 and 315 and the first auxiliary permanent magnet units 316 and 317 are symmetrically arranged about the center line A of the second magnet slot along the radial direction of the rotor core. Taking the first auxiliary permanent magnet units 314 and 315 located on one side of the center line A as an example, an angle α1 formed between a magnetization direction of the first auxiliary permanent magnet unit 314 and the center line A of the second magnet slot 12 along the radial direction of the rotor core is smaller than an angle α2 formed between an opposite direction of the magnetization direction of the first auxiliary permanent magnet unit 315 and the center line A of the second magnet slot 12 along the radial direction of the rotor core, that is, 0 ≤ α1 < α2 ≤ 90°.

As shown in FIG. 2, in an embodiment, a length L2 of the auxiliary permanent magnet module 3 in a radial direction of the rotor core 1 is smaller than a length L1 of the main permanent magnet 2 in the radial direction of the rotor core 1, that is, 0 < L2/L1 < 1. In another embodiment, 0.1 ≤ L2/L1 ≤ 0.5. The main permanent magnet 2 is approximately divided into two parts, one part is provided adjacent to the auxiliary permanent magnet module 3 so that the magnetic flux of this part enters an air gap 202 after being connected in series with the auxiliary permanent magnet module 3, and the other part is provided adjacent to the air gap 202. The solid structure of the rotor core 1 is arranged between two adjacent auxiliary permanent magnet modules 3, thereby reducing the opening ratio on the rotor core 1, ensuring the strength of the rotor core 1, and avoiding magnetic saturation that may cause a decrease in magnetic flux density.

In an embodiment, the auxiliary permanent magnet module 3 is provided adjacent to an inner edge of the rotor core 1. A side wall of the auxiliary permanent magnet module 3 adjacent to the inner edge of the rotor core and a side wall of the main permanent magnet 2 adjacent to the inner edge of the rotor core are located on a same circle centered on an axis of the rotor core 1. That is, a plurality of auxiliary permanent magnet modules 3 are distributed along a circumferential direction of the rotor core 1, and the auxiliary permanent magnet modules 3 are provided adjacent to the rotor shaft, which means that the auxiliary permanent magnet modules 3 are positioned at magnetic leakage areas of a conventional spoke-type rotor core 1. Magnetic poles on both sides of the main permanent magnet 2 and magnetic poles on outer sides of the auxiliary permanent magnet modules 3 are identical, thereby enlarging the area of the region with a dense magnetic flux, enhancing the magnetic flux density in the air gap 202, and weakening internal magnetic leakage. As shown in FIG. 1, the materials of the main permanent magnet 2 and the auxiliary permanent magnet module 3 may be neodymium iron boron or ferrite. The main permanent magnet 2 has a rectangular cross section, and its magnetization direction is tangentially parallel to the tangential direction of the rotor core 1. In the adjacent main permanent magnet 2 and auxiliary permanent magnet module 3, a side surface of the main permanent magnet 2 facing the auxiliary permanent magnet module 3 is parallel or attached to a side surface of the auxiliary permanent magnet module 3 facing the main permanent magnet 2. For example, an overall shape of each auxiliary permanent magnet module 3 in the second magnet slot 12 may be substantially fan-shaped, such as a standard fan shape or a fan shape provided with arc-shaped inner and outer side walls, such that the spacing between the auxiliary permanent magnet module 3 and the main permanent magnet 2 is uniform, thereby better enhancing the magnetic flux linkage of the main magnetic circuit and reducing magnetic leakage near the rotor shaft. It is understood that the materials and shapes of the main permanent magnet 2 and the auxiliary permanent magnet module 3 described above are merely examples, and the present application is not limited to the materials or shapes of the main permanent magnet 2 and the auxiliary permanent magnet module 3.

In an embodiment, as shown in FIG. 2 and FIG. 3, a distance D is provided between a side surface of the main permanent magnet 2 facing the auxiliary permanent magnet module 3 and a side surface of the auxiliary permanent magnet module 3 facing the main permanent magnet 2, where 0 ≤ D ≤ 0.5 mm. Specifically, the smaller the distance D between the side surface of the main permanent magnet 2 facing the auxiliary permanent magnet module 3 and the side surface of the auxiliary permanent magnet module 3 facing the main permanent magnet 2, the better the enhancement of the magnetic flux linkage of the main magnetic circuit and the greater the reduction of magnetic leakage near the rotor shaft.

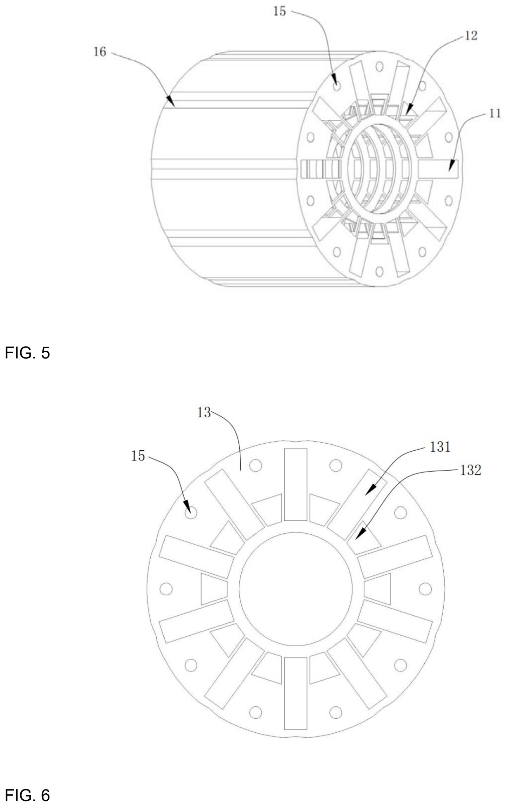

In an embodiment, as shown in FIG. 6 and FIG. 7, the rotor core 1 includes a plurality of stacked first silicon steel sheets 13, and both the main permanent magnet 2 and the auxiliary permanent magnet module 3 pass through the first silicon steel sheets 13. A plurality of first through slots 131 and a plurality of second through slots 132 are formed in the first silicon steel sheets 13. The first through slots 131 of the plurality of first silicon steel sheets 13 are sequentially communicated to form the first magnet slots 11, and the second through slots 132 of the plurality of first silicon steel sheets 13 are sequentially communicated to form the second magnet slots 12. That is, the rotor core 1 may be formed by laminating one type of silicon steel sheet, and the rotor core 1 is fixed by a fastener. Solid iron core structures are provided between the auxiliary permanent magnet module 3 and the main permanent magnet 2, and between the permanent magnets (the auxiliary permanent magnet module 3 and the main permanent magnet 2) and the rotor shaft, to partially sacrifice magnetic flux while reducing the structural complexity of the rotor core 1 and enhancing its structural strength.

In an embodiment, the rotor core 1 includes a plurality of stacked first silicon steel sheets 13, and at least one second silicon steel sheet 14 is stacked between at least two adjacent first silicon steel sheets 13. Both the main permanent magnet 2 and the auxiliary permanent magnet module 3 pass through the first silicon steel sheets 13 and the second silicon steel sheets 14, and the second silicon steel sheet 14 is provided with a hollow portion 141. Each main permanent magnet 2 and each auxiliary permanent magnet module 3 are at least partially located in the hollow portion 141. A plurality of first through slots 131 and a plurality of second through slots 132 are formed in the first silicon steel sheets 13. The first through slots 131 of the plurality of first silicon steel sheets 13 are correspondingly arranged to form the first magnet slots 11, and the second through slots 132 of the plurality of first silicon steel sheets 13 are correspondingly arranged to form the second magnet slots 12. Both the main permanent magnet 2 and the auxiliary permanent magnet module 3 pass through the second silicon steel sheet 14, and the second silicon steel sheet 14 has the hollow portion 141, in which each main permanent magnet 2 and each auxiliary permanent magnet module 3 are at least partially located. Because of the presence of the hollow portion 141, the second silicon steel sheet 14 eliminates solid iron core structures between the auxiliary permanent magnet module 3 and the main permanent magnet 2, as well as between the permanent magnets (the auxiliary permanent magnet module 3 and the main permanent magnet 2) and the rotor shaft, thereby further reducing magnetic leakage and improving the back electromotive force, torque, power density, and utilization efficiency of the permanent magnets. In this embodiment, the rotor core 1 is formed by alternately laminating two types of silicon steel sheets 13 and 14 in a certain proportion. The second silicon steel sheet 14 removes part of the solid iron core structures between the auxiliary permanent magnet module 3 and the main permanent magnet 2, as well as those between the permanent magnets and the outer portion of the rotor shaft, thereby further reducing magnetic leakage and improving the utilization rate of the permanent magnets and the power density of the motor. The first silicon steel sheet 13 supports the main permanent magnet 2, the auxiliary permanent magnet module 3, and the connection between the rotor core 1 and the rotor shaft.

In an embodiment, a plurality of first positioning slots 142 and a plurality of second positioning slots 143 are spaced apart along an edge of the hollow portion 141 of the second silicon steel sheet 14. The number of the first positioning slots 142 is identical to and corresponds one-to-one with the number of the first through slots 131, and the number of the second positioning slots 143 is identical to and corresponds one-to-one with the number of the second through slots 132. Both the first positioning slots 142 and the second positioning slots 143 are in communication with the hollow portion 141. One end of each main permanent magnet 2 is clamped into a corresponding first positioning slot 142 and is partially located within the hollow portion 141, and one end of each auxiliary permanent magnet module 3 is clamped into a corresponding second positioning slot 143 and is partially located within the hollow portion 141. The second silicon steel sheet 14 cooperates with the main permanent magnets 2 through the first positioning slots 142 and cooperates with the auxiliary permanent magnet modules 3 through the second positioning slots 143, thereby achieving positional limitation of the main permanent magnets 2 and the auxiliary permanent magnet modules 3.

In the present application, the rotor core 1 may be entirely formed by laminating the first silicon steel sheets 13, or the rotor core 1 may be formed by alternately laminating one first silicon steel sheet 13 and one second silicon steel sheet 14 in sequence, or by alternately laminating two first silicon steel sheets 13 and three second silicon steel sheets 14 in sequence. The present application does not limit the ratio of alternately stacking the first silicon steel sheets 13 and the second silicon steel sheets 14.

Both the first silicon steel sheets 13 and the second silicon steel sheets 14 are provided with installation holes 15. The fasteners may be rivets or bolts. The first silicon steel sheets 13 and the second silicon steel sheets 14 are aligned, and the fasteners sequentially pass through the installation holes 15 of the first silicon steel sheets 13 and the second silicon steel sheets 14 for locking, thereby ensuring the lamination factor of the rotor core 1 and the structural strength of the rotor.

As shown in FIG. 1, FIG. 2, and FIG. 8, in an embodiment, the slots 16 are formed on an outer edge of the rotor core 1 corresponding to each main permanent magnet 2, and the slots 16 are not in communication with the corresponding first magnet slots 11. That is, one end of each first magnet slot 11 distant from the axis of the rotor core 1 is of a closed structure, which can reduce the risk of the main permanent magnets 2 being thrown out during high-speed rotation. Furthermore, due to the presence of the slots 16, a non-uniform air gap 202 is formed between the outer edge of the rotor core 1 and the inner edge of the stator, thereby reducing torque ripple.

Based on the above embodiment, the slots 16 are gradually expanded in a direction toward the outer edge of the rotor core 1, and inner walls of the slots 16 are smoothly transitioned to the outer edge of the rotor core 1. In this way, the air gap 202 formed between the outer edge of the rotor core 1 and the inner edge of the stator presents a gradual trend of first increasing and then decreasing, with a smooth transition, thereby avoiding additional torque ripple caused by abrupt changes in the air gap 202.

In an embodiment, the outer edge of the rotor core 1 is formed by multiple arc segments to form the slot 16 structure, as shown in FIG. 1, where the rotor center is O1. Taking the right side of the center line as an example, the first arc segment is the arc on the right side of point Q, with the rotor center O1 as the center and a radius R1; the arc on the left side of point Q takes O2 as the center and a radius R2. The centers O1 and O2 are not coincident, and R2 is smaller than R1. These two arc segments form a non-uniform air gap 202, thereby achieving the effect of reducing torque ripple.

In addition, as shown in FIG. 8, the present application further provides a motor including a stator assembly 201 and the motor rotor 100 as described above, where the stator assembly 201 is sleeved around a periphery of the motor rotor 100. Since the motor includes the motor rotor 100 as described above, the motor possesses all the technical effects of the motor rotor 100, which will not be repeated herein.

The following table compares the torque performance between the rotor core 1 topology in an embodiment of the present application and the conventional spoke-type topology. The two configurations have identical stack thicknesses, air gap dimensions, rotor core and permanent magnet materials, winding distributions, wire diameters, and number of turns, with only the rotor topology being different. When the magnetization direction of the auxiliary permanent magnet module 332 forms an angle α of 30° with the center line of the second magnet slot along the radial direction of the rotor core, it can be observed that, compared with the conventional spoke-type motor, the motor provided in the embodiment of the present application achieves a 21.65% improvement in torque/power density and a 2.1% reduction in torque ripple. The topology combining the spoke-type structure with the auxiliary permanent magnet modules 3 provided in the present application can effectively enhance the torque/power density of the motor and reduce torque ripple.

**[Table 1-sm-0002]**

| | average torque/Nm | torque ripple peak-to-peak value/Nm | torque ripple value/% |
|---|---|---|---|
| conventional spoke-type | 1.199 | 0.050 | 4.20% |
| main permanent magnet plus auxiliary permanent magnet module | 1.458 | 0.031 | 2.10% |

FIG. 9 is a comparison diagram illustrating the absolute value of the core magnetic flux density between the topology combining the spoke-type structure with the auxiliary permanent magnet modules (that is, the main permanent magnets 2 and the auxiliary permanent magnet modules 3) provided in the present application and the conventional spoke-type topology (provided with only the main permanent magnets). The comparison is made at a position where the vertical distance H from the side edge of the first magnet slot 11 and the second magnet slot 12 adjacent to the rotor shaft is 1 mm (the vertical distance H is shown in FIG. 2 and FIG. 3). It can be seen that the topology provided in the present application can effectively reduce magnetic leakage near the rotor shaft in a conventional spoke-type motor, thereby increasing the effective magnetic flux linkage, which contributes to improving the back electromotive force and enhancing the torque/power density of the motor 200.

FIG. 10 is a diagram showing the relationship between the angle α, which is formed between the magnetization direction of the auxiliary permanent magnet modules 3 and the center line A of the second magnet slot 12 along the radial direction of the rotor core 1, and the torque performance of the motor. The variation range of the angle α is [0°, 90°]. Within this range, as the angle α increases, the average torque of the motor 200 gradually decreases, while the torque ripple of the motor 200 first decreases and then increases. The trend of the torque performance of the motor 200 indicates that an optimal value of the angle α exists for different torque performance requirements. Under the condition that the average torque meets the requirement, the magnetic flux density distribution can be optimized by appropriately selecting the angle α, thereby rapidly reducing torque ripple. The preferred range of the angle α is 0° to 40°, which is particularly suitable when the motor 200 has five pole pairs, that is, when the number of main permanent magnets 2 is ten.

The foregoing description is merely embodiments of the present application and is not intended to limit the scope of the present application. Any equivalent structural modifications made based on the inventive concept of the present application and the contents of the specification and drawings, or any direct or indirect application of the present application to other related technical fields, shall fall within the scope of protection of the present application.

## Claims

1. A motor rotor, **characterized by** comprising: a rotor core provided with a plurality of first magnet slots uniformly distributed along a circumferential direction of the rotor core, wherein:
the first magnet slots extend in a radial direction, and a tangentially magnetized main permanent magnet is provided in the first magnet slot;
a second magnet slot is provided between any two adjacent first magnet slots on the rotor core, and an auxiliary permanent magnet module is provided in the second magnet slot; the auxiliary permanent magnet module comprises at least two first auxiliary permanent magnet units, and closest surface magnetic poles of any two adjacent main permanent magnets are identical;
a magnetization direction of the first auxiliary permanent magnet unit comprises a radial magnetization component; a direction of the radial magnetization component of the first auxiliary permanent magnet unit located between two main permanent magnets provided with magnetization directions facing each other is directed toward a stator along a radial direction of the rotor core, and a direction of the radial magnetization component of the first auxiliary permanent magnet unit located between two main permanent magnets provided with magnetization directions diverging from each other is directed toward a rotor axis along the radial direction of the rotor core; and
the magnetization direction of the first auxiliary permanent magnet unit comprises a tangential magnetization component, and the tangential magnetization component of the first auxiliary permanent magnet unit is identical to a magnetization direction of the main permanent magnet adjacent to the first auxiliary permanent magnet unit; the magnetization direction of the main permanent magnet and the tangential magnetization direction of the first auxiliary permanent magnet unit both are tangential directions of a circle centered on the axis of the rotor core.

2. The motor rotor according to claim 1, wherein the at least two first auxiliary permanent magnet units comprise at least two auxiliary permanent magnets provided with at least one magnetization direction, or one auxiliary permanent magnet provided with at least two magnetization directions.

3. The motor rotor according to claim 1, wherein an angle between all magnetization directions or opposite directions of the magnetization directions in the auxiliary permanent magnet module and a center line of the second magnet slot along the radial direction of the rotor core is defined as α, and α is greater than or equal to 0° and less than or equal to 90°.

4. The motor rotor according to claim 2, wherein an angle between all magnetization directions or opposite directions of the magnetization directions in the auxiliary permanent magnet module and a center line of the second magnet slot along the radial direction of the rotor core is defined as α, and α is greater than or equal to 0° and less than or equal to 40°.

5. The motor rotor according to claim 2, wherein the auxiliary permanent magnet modules are symmetrically distributed about a center line of the second magnet slot along the radial direction of the rotor core, and an angle α of each of the first auxiliary permanent magnet units located on one side of the center line decreases gradually from a side distant from the center line toward a side adjacent to the center line.

6. The motor rotor according to claim 1, wherein the auxiliary permanent magnet module further comprises a second auxiliary permanent magnet unit located between the first auxiliary permanent magnet units, and an angle α between a magnetization direction of the second auxiliary permanent magnet unit and a center line of the second magnet slot along the radial direction of the rotor core is 0°.

7. The motor rotor according to claim 1, wherein the auxiliary permanent magnet module is provided adjacent to an inner edge of the rotor core.

8. The motor rotor according to claim 7, wherein a side wall of the auxiliary permanent magnet module adjacent to the inner edge of the rotor core and a side wall of the main permanent magnet adjacent to the inner edge of the rotor core are located on a same circle centered on the axis of the rotor core.

9. The motor rotor according to claim 1, wherein a length of the auxiliary permanent magnet module along the radial direction of the rotor core is L2, and a length of the main permanent magnet along the radial direction of the rotor core is L1; L2/L1 is greater than 0 and less than 1.

10. The motor rotor according to claim 9, wherein L2/L1 is greater than or equal to 0.1 and less than or equal to 0.5.

11. The motor rotor according to claim 1, wherein in adjacent main permanent magnets and auxiliary permanent magnet modules, a side surface of the main permanent magnet facing the auxiliary permanent magnet module is parallel to or in contact with a side surface of the auxiliary permanent magnet module facing the main permanent magnet module.

12. The motor rotor according to claim 1, wherein a distance D is provided between a side surface of the main permanent magnet facing the auxiliary permanent magnet module and a side surface of the auxiliary permanent magnet module facing the main permanent magnet, and D is greater than or equal to 0 mm and less than or equal to 0.5 mm.

13. The motor rotor according to any one of claims 1 to 12, wherein:
the rotor core comprises a plurality of stacked first silicon steel sheets, and the main permanent magnet and the auxiliary permanent magnet module both pass through the first silicon steel sheets; and/or
the rotor core comprises a plurality of stacked first silicon steel sheets, and at least one second silicon steel sheet is stacked between at least two adjacent first silicon steel sheets; the main permanent magnet and the auxiliary permanent magnet module both pass through the first silicon steel sheet and the second silicon steel sheet; the second silicon steel sheet is provided with a hollow portion, and the main permanent magnet and the auxiliary permanent magnet module are at least partially located in the hollow portion.

14. A motor, **characterized by** comprising:
a stator assembly; and
the motor rotor according to any one of claims 1 to 13, wherein the stator assembly is disposed around a periphery of the motor rotor.
